# FASCICULE DE BREVET EUROPEEN

(11) **EP 0 526 329 B1**
(45) Date de publication et mention de la délivrance du brevet: **25.10.1995**
(21) Numéro de dépôt: 92402181.9
(22) Date de dépôt: 29.07.1992
(51) Int. Cl.: B23P 19/08

(54) **Machine pour la pose automatique de segments sur des pistons**
Maschine zum automatischen Setzen von Ringen auf Kolben
Machine for the automatic fitting of rings on pistons

(30) Priorité: 31.07.1991 FR 9109751
(43) Date de publication de la demande: 03.02.1993
(73) Titulaire: FLOQUET MONOPOLE, F-78301 Poissy (FR)
(72) Inventeur: Fefeu, Michel Alain, F-78114 Magny-les-Hameaux (FR); Schreiber, Alfred, F-93600 Aulnay-sous-Bois (FR); Nwokoye, Donatus Okechukwu, F-78955 Carrières-sous-Poissy (FR); Charton, François, Georges, F-78410 Aubergenville (FR)
(74) Mandataire: Jacquelin, Marc-Henri

(56) Documents cités:
- EP-A- 0 457 627
- GB-A- 802 780
- JP-A-54 137 175
- JP-A-55 011 773
- JP-A-55 137 849
- JP-A-63 150 119
- JP-A-63 196 328
- PATENT ABSTRACTS OF JAPAN vol. 5, no. 101 (M-076)30 Juin 1981 & JP-A-56 045 339 (MITSUBISHI MOTORS CORP.) 25 Avril 1981

## Description

La présente invention concerne une machine pour la pose automatique de segments sur des pistons, en particulier sur des pistons de moteurs à combustion interne.

Il pourra s'agir notamment, mais non exclusivement, de segments racleurs de faible épaisseur, constitués chacun de deux bagues fendues et plates pouvant faire 4/10ème mm d'épaisseur, appelées communément "rails", et séparées par une bague-ressort fendue également, de conformation spéciale, appelée communément "spacer", ces éléments étant constitués d'un alliage d'acier et pouvant présenter, une fois superposés et placés dans la gorge correspondante du piston, une épaisseur totale de l'ordre de 2 mm. Le spacer élastique peut avoir différentes configurations et comporter par exemple, du côté radialement intérieur, un épaulement périphérique ondulé, grâce auquel ce spacer, par son élasticité radiale, exerce sur les deux rails une pression radiale vers l'extérieur, nécessaire à la réalisation de l'étanchéité autour du piston lorsqu'il est placé dans son cylindre.

Les figures 1 à 4 des dessins ci-annexés montrent à titre d'exemple les éléments constitutifs d'un tel segment racleur.

La figure 1 montre un rail 1 en plan et la figure 2 un spacer également vu en plan, avec ses épaulements 3, la figure 3 étant une vue de profil de ce spacer. La figure 4 monte en section transversale le segment racleur constitué par l'empilage de deux rails 1 et d'un spacer 2, la partie radialement extérieure de ce segment correspondant à la partie gauche de la figure. La faible épaisseur des rails et le profil particulier du spacer font que leur pose dans les gorges des pistons a été assurée jusqu'à présent de façon manuelle.

Le but de la présente invention est de résoudre les problèmes qui se présentent lorsque l'on souhaite réaliser une machine de pose automatique de tels segments.

Spacers et rails étant de formes très différentes, comme on vient de le voir, la machine présentera des dispositions spécifiques pour permettre leur introduction séquentielle dans la gorge concernée du piston, et ces dispositions, tant pour ce qui concerne les rails que pour ce qui concerne les spacers, pourront présenter un certain nombre de variantes.

Le document JP-A-63 150119 propose une machine comportant des butées (4) qui, pour la mise en place du spacer (2) dans la gorge (6a) du piston (6), exercent une contrainte radiale sur ces spacers ; étant donné qu'il s'agit d'éléments facilement déformables, ils risquent alors de subir des dommages, ou de voir leurs extrémités se chevaucher.

Un autre but de l'invention est d'éviter ce type d'inconvénient.

Pour ce qui est tout d'abord de la distribution des spacers, on propose une machine comportant un tube-magasin creux comportant en bout un alésage élargi terminé à l'extérieur par un chanfrein et constituant un siège pour un piston, de telle sorte que la gorge à garnir du piston se situe au voisinage dudit chanfrein, sur lequel tube est enfilée une pile desdits spacers qui peut être coulissée automatiquement et pas-à-pas sur le tube par un poussoir axialement mobile, et en ce qu'il est prévu en outre, de l'autre côté de ladite pile par rapport audit poussoir, et au voisinage du chanfrein précité, une butée axialement mobile apte à occuper successivement deux positions axialement décalées, à savoir une première position pour laquelle elle bloque ladite pile de spacers entre elle et ledit poussoir, le dernier spacer de la pile, sur lequel elle s'appuie, étant alors en appui radial sur ledit chanfrein, et une seconde position pour laquelle cette butée s'écarte dudit dernier spacer, lui permettant ainsi de glisser sur ledit chanfrein et de pénétrer par resserrement radial dans la gorge correspondante dudit piston.

De préférence, on prévoit en outre que pour ladite deuxième position de ladite butée, ledit poussoir est également écarté de ladite pile de spacers, pour permettre un léger déplacement de cette dernière vers le bas, à l'exception du dernier spacer de sorte à ne pas entraver ledit resserrement radial dudit dernier spacer, à introduire dans la gorge concernée du piston.

On verra mieux plus bas, à la lecture de l'exemple de réalisation, le mode opératoire d'une machine ainsi conçue.

Pour ce qui est maintenant des rails, à amener dans la même gorge du piston de part et d'autre du spacer dont il vient d'être question, il est prévu que la machine pourra se caractériser essentiellement en ce que pour la pose des rails dans ladite gorge du piston, de part et d'autre du spacer précédemment posé, elle comporte un tube-magasin sur lequel est enfilée une pile de rails reposant sur un poussoir, ledit tube étant mobile verticalement selon son axe, un ensemble de tiroirs à encoches propres à coulisser dans une boîte fixe dans une direction perpendiculaire audit axe, et un ensemble de pinces mobiles à la fois dans la direction perpendiculaire audit axe et verticalement dans la direction de cet axe, ces pinces ayant pour fonction de pousser successivement lesdits rails respectivement dans les encoches des tiroirs et de guider ledit piston vers le bas lorsque, après leur remontée, ces pinces permettent auxdits rails d'être libérés desdits tiroirs et de pénétrer dans ladite gorge du piston.

Avantageusement, la machine pourra encore se caractériser en ce que lesdits tiroirs présentent, juste en avant desdites encoches, des seuils inclinés comprimant légèrement les rails radialement vers l'intérieur lors des mouvements de montée dudit tube-magasin, lesdites encoches étant délimitées par ailleurs par des butées arrêtant lesdits rails au niveau desdites encoches.

On verra plus précisément plus bas comment une telle machine peut être consituée, avec d'autres dispositions possibles et variantes.

Tous ces modes d'exécution de l'invention vont maintenant être décrits à titre d'exemples nullement limitatifs avec référence aux autres figures du dessin annexé dans lequel :

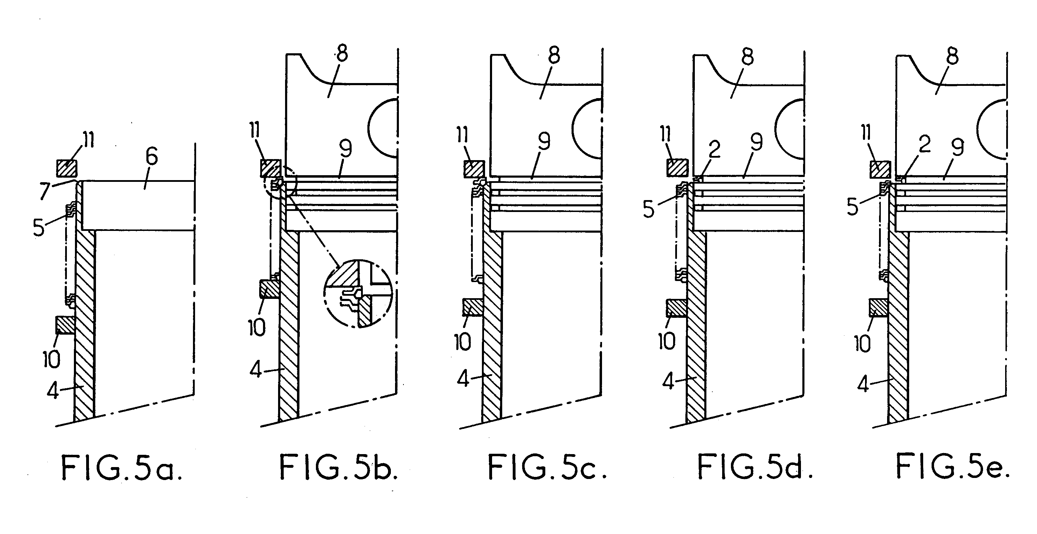

- les figures 5a à 5e montrent schématiquement, en demi-coupes axiales, les différentes phases de fonctionnement de la machine, pour la pose d'un spacer dans une gorge de piston ;

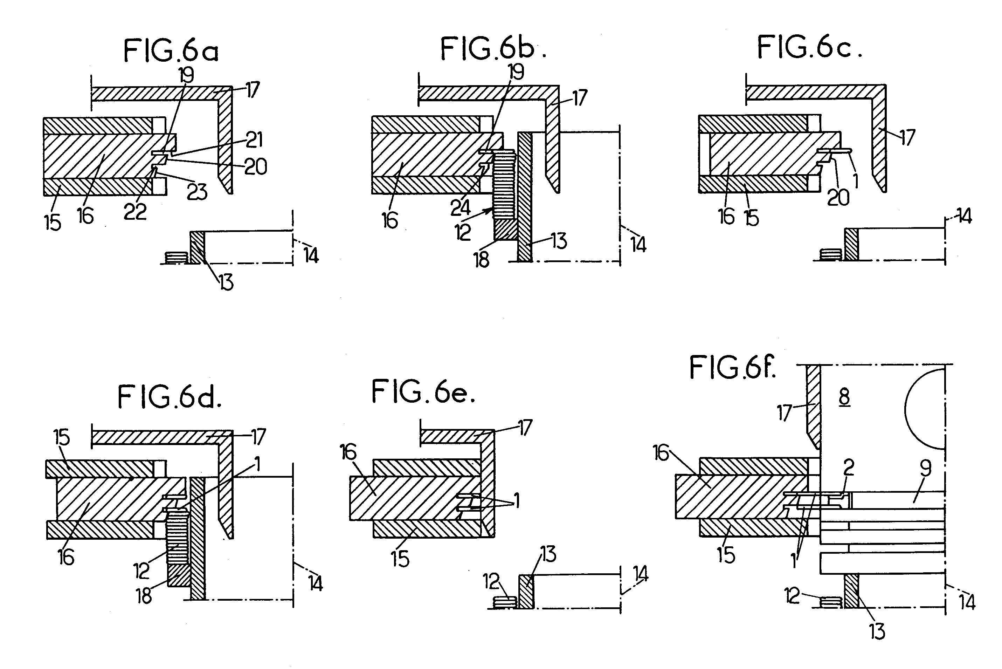

- les figures 6a à 6f montrent schématiquement en demi-coupes axiales, les différentes phases de fonctionnement de la machine, pour la pose de deux rails, de part et d'autre du spacer déjà posé, dans ladite gorge ;

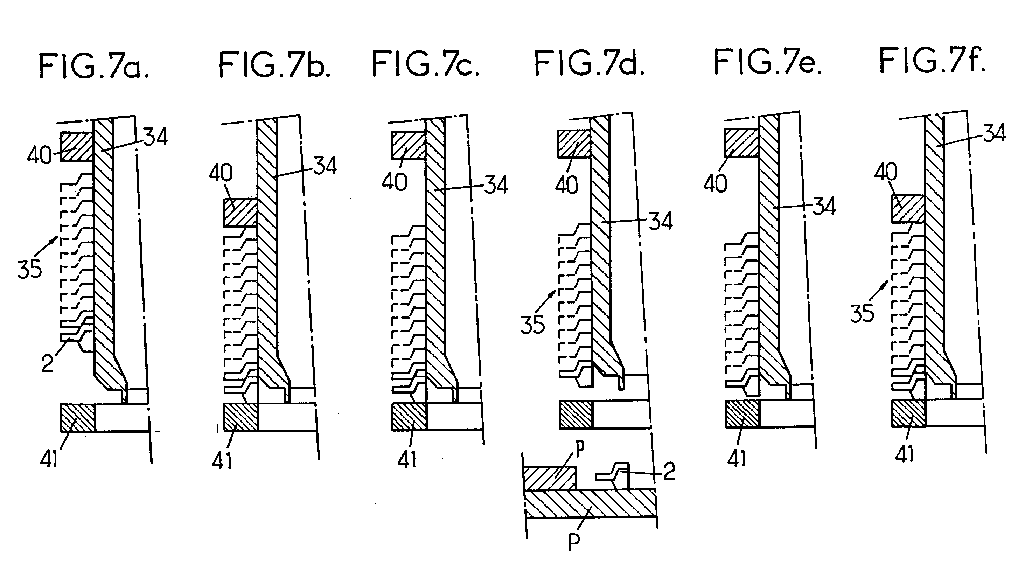

- les figures 7a à 7f représentent schématiquement en demi-coupes axiales, un autre système de séparation et de distribution de spacers dans un autre type de machine conforme à l'invention ;

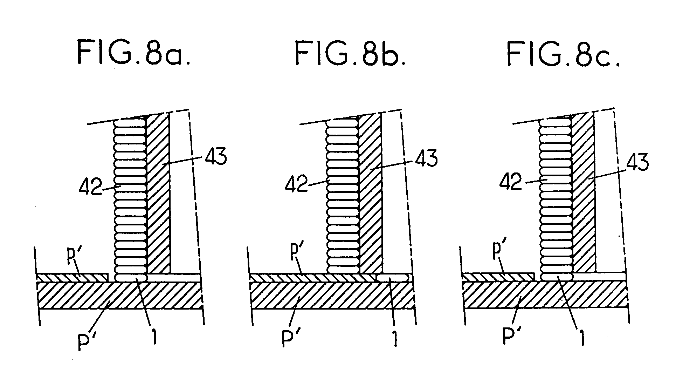

- les figures 8a à 8c décrivent schématiquement le mode de distribution des rails ; et

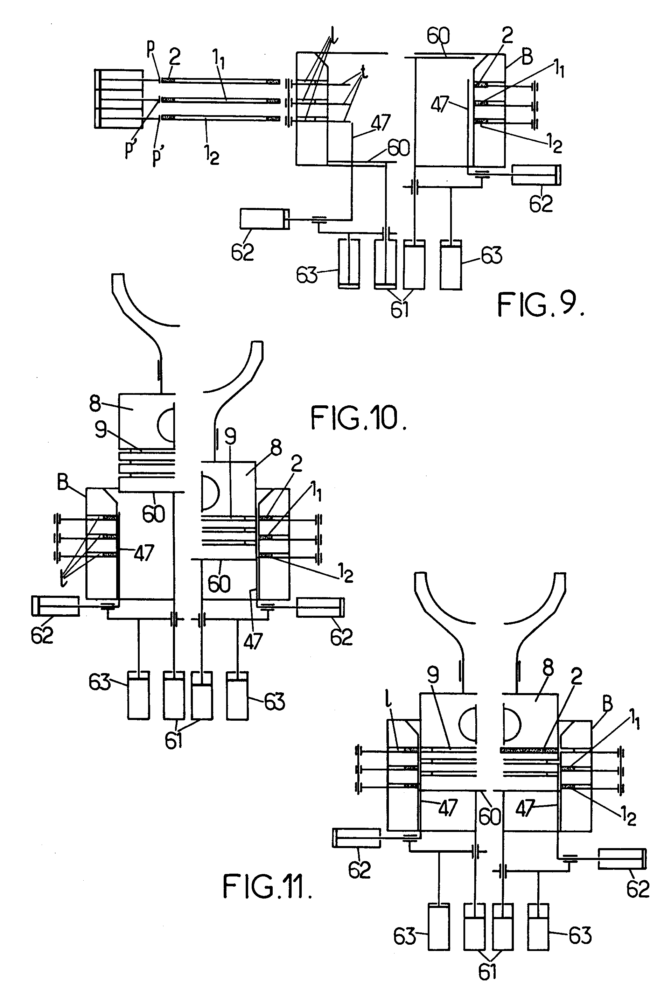

- les figures 9 à 15 représentent les différentes phases de fonctionnement de la machine, dans des vues schématiques.

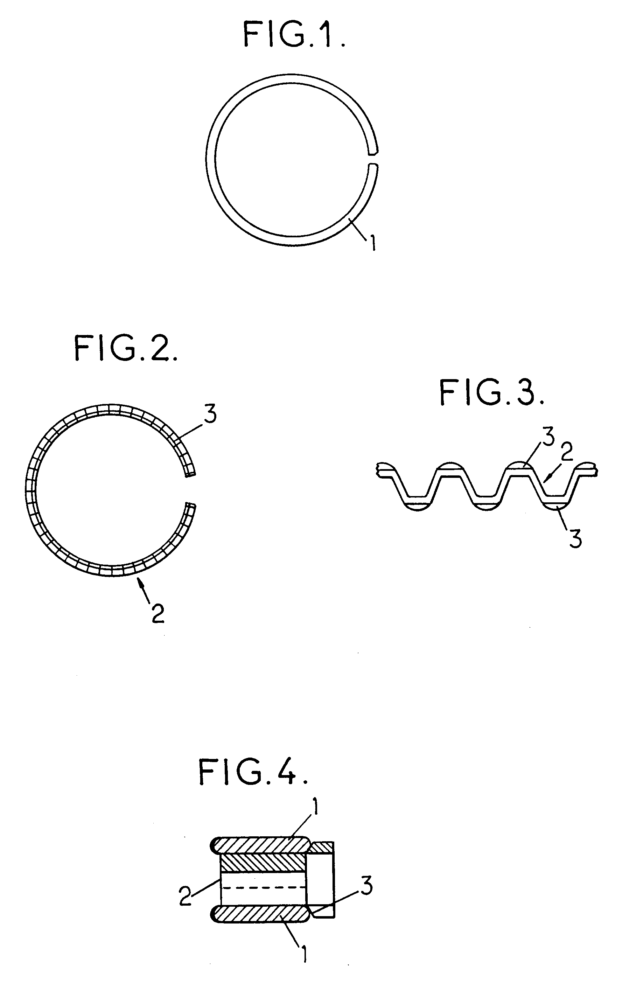

Sur les figures 5a à 5e on a référencé en 4 un tube-magasin creux et en 5 une pile de spacers analogues à ceux des figures 2 et 3, ces spacers étant élastiquement distendus du fait de leur engagement sur un tube de diamètre légèrement supérieur à leur diamètre au repos. Le tube 4 comporte à son extrémité supérieure un alésage élargi 6 terminé à l'extérieur par un chanfrein 7 et constituant un siège pour un piston 8. La profondeur de l'alésage 6 est telle que le flanc inférieur de la gorge à garnir 9 du piston une fois mis en place se trouve au niveau du bord supérieur de cet alésage. La machine comporte en outre un poussoir annulaire et axialement mobile 10 engagé sur le tube 4 au-dessous de la pile 5, et une butée également annulaire et axialement mobile 11, disposée au-dessus de ladite pile.

Ceci étant, dans la position initiale de la figure 5a, on voit que le poussoir 10 et la butée 11 sont écartés de la pile 5 des spacers, la butée étant dans sa position basse (dite plus haut "première position"). Un piston 8 est mis en place dans l'alésage 6, puis le poussoir 10 est sollicité vers le haut pour presser la pile 5 entre lui et la butée 11. Le spacer supérieur 2 est alors en appui radial sur le chanfrein 7 (figure 5b). Le poussoir 10 est alors redescendu pour que la pile 5 ne bloque pas le spacer supérieur 2, compte tenu du profil ondulé des spacers et de leurs épaulements (figure 5c).

Ensuite la butée 11 est amenée dans sa position haute (seconde position), ce qui permet au spacer 2 en appui radial sur le chanfrein 7 de glisser vers le haut sur celui-ci, du fait de son effet de ressort, et de pénétrer dans la gorge correspondante 9 du piston 8 (figure 5d). Tous ces mouvements sont bien entendu assurés automatiquement et aussi rapidement que possible.

Enfin la butée 11 est redescendue dans sa première position, le piston 8 est enlevé pour aller au poste de pose des rails 1 (figure 5e), et l'on retrouve l'état initial de la figure 5a.

Sur les figures 6a à 6f on a représenté la partie de la machine qui est destinée à poser les rails 1 de part et d'autre du spacer 2 déjà posé dans la gorge 9 du piston 8.

Cette partie de la machine comporte : un tube-magasin creux 13 mobile verticalement selon son axe 14, et également en rotation autour de cet axe, ce tube étant agencé pour assurer le positionnement axial du piston 8 ; une boîte fixe 15 dans laquelle peuvent coulisser un certain nombre de tiroirs 16 (au moins deux) ; et un certain nombre de pinces expansibles 17 (au moins deux) pouvant se déplacer à la fois axialement et perpendiculairement à l'axe 14, ces pinces 17 étant agencées pour assurer l'ouverture et la libération des rails 1, et pour assurer également le centrage du piston 8.

Une pile 12 de rails 1 étant enfilés sans contrainte sur le tube-magasin 13 et étant portés par un poussoir 18, le fonctionnement de ce système est le suivant :
- les tiroirs 16 avancent vers l'axe 14, de même que les pinces 17, qui ont également un mouvement de descente (figure 6a). Le tube-magasin 13 et son poussoir 18 montent, amenant la pile 12 des rails dans la position représentée à la figure 6b. On voit que le rail supérieur 1 de la pile 12 pénètre dans une première encoche 19 du tiroir 16, après avoir franchi un seuil incliné 20 de ce tiroir (en étant momentanément comprimé), et avoir été arrêté par une butée 21 de ce dernier. Ensuite le tube-magasin 13 et son poussoir 18 descendent (figure 6c), et le tube-magasin pivote de 180° sur son axe 14 pour que la fente du rail 1 suivant se trouve diamétralement opposée à celle du rail précédent, étant donné que dans la pile 12 les fentes des rails sont en principe toutes alignées.

Ensuite le tube-magasin et son poussoir remontent (figure 6d) et la même opération que celle de la figure 6b se reproduit pour le rail 1 suivant de la pile (seconde encoche 22 du tiroir, seuil incliné 23, butée 24, le tout fonctionnant de la même façon). Le tiroir est ainsi équipé de deux rails 1. Le tube-magasin et son poussoir redescendent alors à nouveau, et les pinces 17 reculent, de même que les tiroirs 16, pour enfoncer les rails 1 dans les encoches 19 et 22 des tiroirs (figure 6e). Ensuite de quoi, il suffit de faire descendre le piston 8, guidé par les pinces 17, jusqu'à mise en butée sur le sommet du tube-magasin 13, puis de faire pénétrer les deux rails 1 dans la gorge 9, de part et d'autre du rail 2 précédemment posé (figure 6f). Pour ce faire il suffit de faire remonter les pinces 17, ce qui libère les rails des tiroirs et les laisse pénétrer dans la gorge 9.

On va décrire maintenant une machine complète mettant en oeuvre soit certaines des dispositions qui viennent d'être décrites, notamment pour les spacers, soit d'autres dispositions, en particulier pour effectuer la pose des rails.

Le principe général de cette machine réside dans le fait qu'elle comporte principalement :
- un système d'alimentation constitué de deux distributeurs pour les rails 1, avec séparation et alimentation simultanées, et d'un distributeur pour le spacer 2, avec séparation en amont de l'alimentation, l'alimentation s'effectuant en temps masqué ;
- une boîte fixe B pour la réception des éléments de segment et du piston, comportant des logements 1 réceptionnant les éléments 1 et 2 du segment et assurant leur positionnement avant montage avec l'aide de butées coulissantes, des tiroirs t étant prévus pour chaque élément ;
- un système de pinces expansibles et coulissantes 47 assurant l'ouverture et la libération des éléments 1, 2 du segment ainsi que le centrage du piston 8 ; et
- un plateau coulissant 60 assurant les positionnements successifs du piston 8 lors de la libération de chaque élément de segment 1, 2 dans la gorge 9 du piston.

Il peut y avoir par exemple quatre pinces expansibles, trois logements l et quatre tiroirs t pour chaque élément 2, 1₁ ou 1₂.

Avec référence aux figures 7a à 7f, on va décrire tout d'abord le système de séparation et de distribution des spacers 2.

La séparation du dernier spacer 2 d'une pile 35 s'effectue grâce aux éléments suivants : un tube-magasin 34 sur lequel sont enfilés les spacers 2 ; une butée annulaire fixe 41 assurant le positionnement du spacer d'extrémité 2 ; et un poussoir 40 mobile axialement le long du tube 34 (par analogie avec le système des figures 5a à 5e, on a donné les mêmes références, augmentées de 30, aux organes analogues - sauf aux spacers 2).

Pour la distribution des spacers 2 dans la boîte B précitée (qui sera vue plus bas), le système comporte une plate-forme P de réception du spacer 2 après séparation, et un pousseur p.

Le fonctionnement du dispositif est le suivant :
l'état initial étant celui de la figure 7a, le poussoir 40 descend et pousse la pile 35 des spacers contre la butée fixe 41 (figure 7b). Le poussoir 40 remonte (figure 7c).

Le tube-magasin 34 monte, ce qui libère le dernier spacer 2, qui tombe sur la plate-forme P ; le pousseur p l'introduit dans la boîte (figure 7d). Ensuite le tube 34 redescend (figure 7e) et l'on retrouve (figure 7f) la position de la figure 7 (b). Le processus se répète ensuite de la même manière pour les spacers suivants.

Pour la distribution des rails 1, on utilise deux tubes-magasins 43 (figures 8a à 8c) qui peuvent être diamétralement opposés par rapport au centre de la boîte B et sur lesquels les piles 42 de rails 1 sont enfilées, sans aucune contrainte. Deux plates-formes P′ reçoivent le dernier rail 1, et celui-ci, à la partie inférieure de chacun des tubes-magasins 43, est mis en position par un pousseur p′. A partir de l'état initial de la figure 8a, le pousseur p′ pousse le dernier rail 1 dans la boîte B (figure 8b) puis le rail 1 suivant descend par gravité sur la plate-forme P′ (figure 8c).

Il est à noter que la gorge 9 supérieure du piston 8 étant chanfreinée à sa partie inférieure, il conviendra d'observer l'ordre suivant pour l'introduction des éléments 1 et 2 du segment : spacer 2, rail 4 supérieur (au-dessus du spacer), rail 1₂ inférieur (au-dessous du spacer). Par suite, on dispose les trois éléments précités comme suit dans la boîte B : spacer 2 en haut, rail 1₁ supérieur au milieu, rail 1₂ inférieur en bas.

Ceci étant, le fonctionnement général de la machine va être décrit ci-dessous avec référence aux figures 9 à 15.

Sur toutes ces figures, le piston a toujours été référencé en 8, et la gorge à garnir d'un segment en 9. Les quatre pinces expansibles et coulissantes ont été référencées 47 ; elles sont mobiles horizontalement grâce à des vérins 62 eux-mêmes déplaçables verticalement grâce à des vérins 63. En 60 est référencé un plateau coulissant propre à se déplacer verticalement sous l'action d'un vérin 61.

La figure 9 montre l'alimentation de la boîte B en éléments 2, 1₁ et 1₂. Sur cette figure comme sur les figures suivantes, la moitié gauche représente l'état initial des différentes parties mobiles, et la moitié droite leur état final, qui à chaque fois constitue l'état initial de la phase de fonctionnement suivante. Dans l'état initial de la figure 9, les trois éléments 2, 1₁ et 1₂ du segment sont sur leurs plates-formes respectives de poussée P et P′ ; les tiroirs t sont fermés, de même que les pinces 47, qui sont alors en position basse. Le plateau 60 est également en position basse, au-dessous des tiroirs t.

Les éléments 2, 1₁ et 1₂ sont poussés simultanément dans la boîte B, les pinces 47 montent jusqu'au niveau du spacer 2 et s'écartent radialement vers l'extérieur, ainsi que les tiroirs t. Le plateau 60 monte jusqu'au niveau supérieur de la boîte B. Ainsi les éléments 2, 1₁ et 1₂ sont dans leurs logements respectifs l et sont expansés. De nouveaux éléments sont distribués, sur les plates-formes P et P′.

Ensuite (figure 10) le piston 8 est descendu sur le plateau 60 et descend avec lui (vérins 61), guidé par les pinces 47. Le plateau 60 est arrêté précisément dans une position pour laquelle sa gorge 9 vient au niveau du spacer 2.

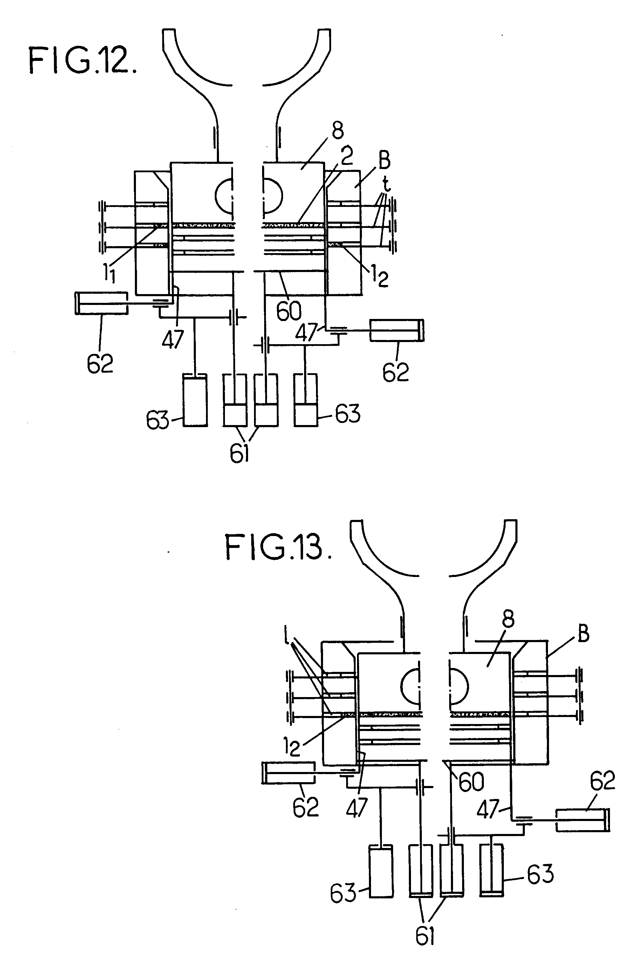

Les pinces 47 descendent (figure 11) jusqu'au-dessous du logement l supérieur, ce qui permet l'introduction automatique du spacer 2 dans la gorge 9.

Les pinces 47 sont ensuite remontées pour recentrer le spacer 2 sur le piston 8 ; le plateau 60 est descendu et arrêté précisément, ainsi que les pinces 47, dans une position pour laquelle le rail supérieur 1₁ peut être libéré dans la gorge 9 du piston, au-dessus du spacer 2 (figure 12).

De même que précédemment, les pinces 47 sont remontées au-dessus du rail 1₁ pour le recentrer, ainsi que le spacer 2, sur le piston 8, ensuite de quoi le plateau 60 est descendu, ainsi que les pinces 47, dans une position pour laquelle le second rail 1₂ peut être libéré dans la gorge 9, au-dessous du spacer 2. Le segment complet est alors en place sur le piston 8 (figure 13).

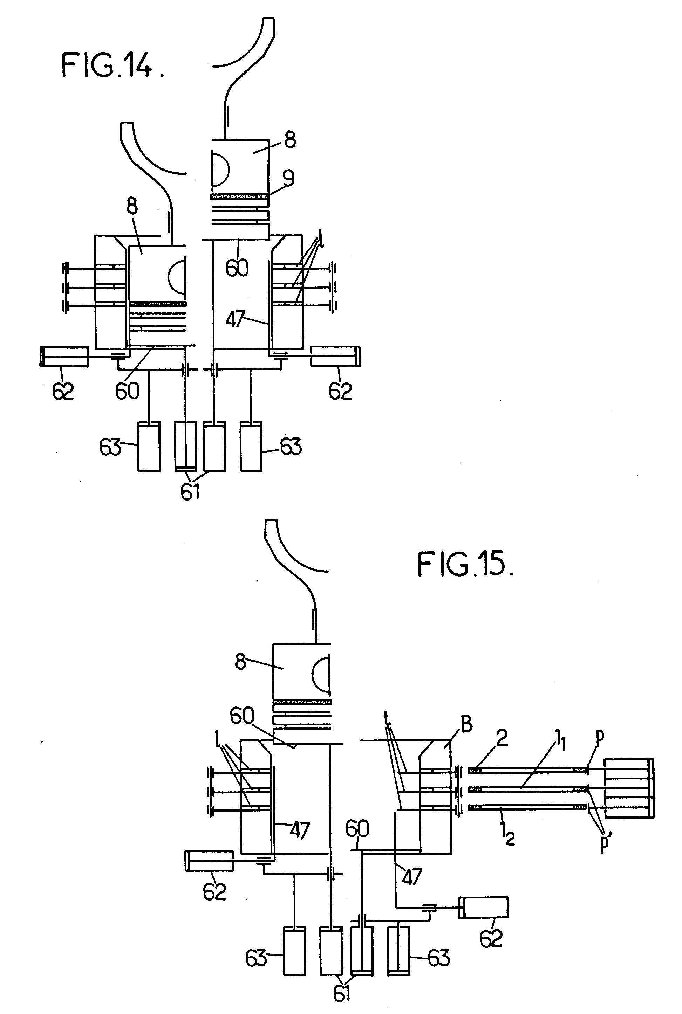

Les pinces 47 sont encore une fois remontées pour centrer ce segment sur le piston. On fait ensuite remonter le plateau 60 et le piston 8, et ce dernier, avec sa bielle, est évacué. Dans cet état final (moitié droite de la figure 14, les pinces 47 sont écartées et en position haute, les tiroirs t sont mutuellement écartés. A partir de l'état initial de la figure 15, le plateau 60 et les pinces 47 sont redescendus, les pinces et les tiroirs t sont refermés et l'on se retrouve dans l'état initial de la figure 9.

## Revendications

1. Machine pour la pose automatique de segments sur des pistons, en particulier sur des pistons de moteurs à combustion interne, pouvant s'agir, notamment, de segments racleurs constitués de deux rails (1) épaulées, du côté radialement intérieur, par un spacer (2) interposée entre elles, comportant, pour l'introduction desdits spacers (2) dans une gorge (9) de piston, un tube-magasin creux (4) comportant en bout un alésage élargi (6) terminé à l'extérieur par un chanfrein (7) et constituant un siège pour un piston (8), de telle sorte que la gorge (9) à garnir du piston se situe au voisinage dudit chanfrein (7), sur lequel tube (4) est enfilée une pile (5) desdits spacers (2) caractérisée en ce que ladite pile (5) peut être coulissée automatiquement et pas-à-pas sur le tube (4) par un poussoir axialement mobile (10), et en ce qu'il est prévu en outre, de l'autre côté de ladite pile (5) par rapport audit poussoir (10), et au voisinage du chanfrein (7) précité, une butée axialement mobile (11) apte à occuper successivement deux positions axialement décalées, à savoir une première position pour laquelle elle bloque ladite pile (5) de spacers entre elle et ledit poussoir (10), le dernier spacer (2) de la pile, sur lequel elle s'appuie, étant alors en appui radial sur ledit chanfrein (7), et une seconde position pour laquelle cette butée (11) s'écarte dudit dernier spacer (2), lui permettant ainsi de glisser sur ledit chanfrein (7) et de pénétrer par resserrement radial dans la gorge (9) correspondante dudit piston (8).

2. Machine selon la revendication 1, caractérisée en ce que pour ladite deuxième position de ladite butée (11), ledit poussoir (10) est également écarté de ladite pile (5) de spacers, pour permettre un léger déplacement de cette dernière vers le bas, à l'exception du dernier spacer (2) de sorte à ne pas entraver ledit resserrement radial dudit dernier spacer, à introduire dans la gorge concernée (9) du piston (8).

3. Machine selon la revendication 1 ou 2, caractérisée en ce que pour la pose des rails (1) dans ladite gorge (9) du piston (8), de part et d'autre du spacer (2) précédemment posé, elle comporte un tube-magasin (13) sur lequel est enfilée une pile (12) de rails (1) reposant sur un poussoir (18), ledit tube étant mobile verticalement selon son axe (14), un ensemble de tiroirs (16) à encoches (19, 22) propres à coulisser dans une boîte fixe (15) dans une direction perpendiculaire audit axe (14), et un ensemble de pinces (17) mobiles à la fois dans la direction perpendiculaire audit axe (14) et verticalement dans la direction de cet axe, ces pinces ayant pour fonction de pousser successivement lesdits rails (1) respectivement dans les encoches (19, 22) des tiroirs (16) et de guider ledit piston (8) vers le bas lorsque, après leur remontée, ces pinces permettent auxdits rails (1) d'être libérés desdits tiroirs (16) et de pénétrer dans ladite gorge (9) du piston.

4. Machine selon la revendication 3, caractérisée en ce que lesdits tiroirs (16) présentent, juste en avant desdites encoches (19, 22), des seuils inclinés (20, 23) comprimant légèrement les rails (1) radialement vers l'intérieur lors des mouvements de montée dudit tube-magasin (13), lesdites encoches étant délimitées par ailleurs par des butées (21, 24) arrêtant lesdits rails au niveau desdites encoches.

5. Machine selon la revendication 1, caractérisée en ce qu'elle comporte :
- un système d'alimentation constitué de deux distributeurs pour les rails (1), avec séparation et alimentation simultanées, et d'un distributeur pour le spacer (2), avec séparation en amont de l'alimentation, l'alimentation s'effectuant en temps masqué ;
- une boîte fixe (B) pour la réception des éléments de segment et du piston, comportant des logements (l) réceptionnant les rails et spacers (1, 2) et assurant leur positionnement avant montage avec l'aide de butées coulissantes, des tiroirs (t) étant prévus pour chaque rail ou spacer ;
- un système de pinces expansibles et coulissantes (47) assurant l'ouverture et la libération des rails et spacers (1, 2) ainsi que le centrage du piston (8) ; et
- un plateau coulissant (60) assurant les positionnements successifs du piston (8) lors de la libération de chaque rail ou spacer (1, 2) dans la gorge (9) du piston.

6. Machine selon la revendication 5, caractérisée en ce que le distributeur de spacers (2) comprend un tube-magasin (34) sur lequel sont enfilés lesdits spacers, une butée annulaire fixe (41) assurant le positionnement du spacer d'extrémité, et un poussoir (40) mobile axialement le long dudit tube, lequel présente à sa partie inférieure un chanfrein suivi d'un rétrécissement de diamètre assurant le centrage dudit spacer d'extrémité.

7. Machine selon la revendication 5 ou 6, caractérisée par une synchronisation de la fermeture et de l'écartement desdites pinces (47) respectivement avec la fermeture et l'écartement desdits tiroirs (t).

## Claims

1. A machine for the automatic fitting of piston rings onto pistons, in particular onto pistons of internal combustion engines, which rings may, in particular, be scraper piston rings constituted by two "rails" (1) stepped, on the radially inward side, by a "spacer" (2) interposed between them, which comprises, for the insertion of said spacers (2) into a piston groove (9), a hollow magazine-tube (4) comprising at the end a widened bore (6) terminating on the outside with a bevel (7) and constituting a seating for a piston (8), so that the piston groove (9) to be equipped is situated in the vicinity of said bevel (7), onto which tube (4) is threaded a stack (5) of said spacers (2) characterized in that said stack (5) can be slid automatically and step by step onto the tube (4) by an axially movable pusher (10), and wherein there is further provided, on the other side of said stack (5) from said pusher (10), and in the vicinity of the abovementioned bevel (7), an axially movable stop (11) adapted to occupy successively two axially offset positions, namely a first position in which it blocks said stack (5) of spacers between it and said pusher (10), the last spacer (2) of the stack, against which it bears, then bearing radially against said bevel (7), and a second position in which this stop (11) is separated from said last spacer (2), thus permitting it to slide onto said bevel (7) and to enter the corresponding groove (9) of said piston (8) by radial tightening.

2. The machine as claimed in claim 1, wherein for said second position of said stop (11), said pusher (10) is also separated from said stack (5) of spacers, so as to permit a slight downward movement of the latter, with the exception of the last spacer (2) so as not to hinder said radial tightening of said last spacer, to be inserted into the groove (9) in question of the piston (8).

3. The machine as claimed in claim 1 or 2, wherein for the fitting of the rails (1) into said groove (9) of the piston (8), on either side of the previously fitted spacer (2), said machine comprises a magazine-tube (13) onto which is threaded a stack (12) of rails (1) resting on a pusher (18), said tube being movable vertically along its axis (14), a set of slides (16) with recesses (19, 22) suitable for sliding in a fixed casing (15) in a direction perpendicular to said axis (14), and a set of grips (17) which are movable both in the direction perpendicular to said axis (14) and vertically in the direction of this axis, these grips havinq the function of pushing said rails (1) in turn respectively into the recesses (19, 22) of the slides (16) and of guiding said piston (8) downward when, after they have been brought back up, these grips permit said rails (1) to be released from said slides (16) and to enter said groove (9) of the piston.

4. The machine as claimed in claim 3, wherein said slides (16) have, just in front of said recesses (19, 22), sloping thresholds (20, 23) slightly compressing the rails (1) radially inward during the upward movements of said magazine-tube (13), said recesses being delimited moreover by stops (21, 24) stopping said rails at said recesses.

5. A machine according to claim 1, characterized in that it comprises:
- a feed system consisting of two distributors for the rails (1), with simultaneous separation and feed, and a distributor for the spacer (2), with separation upstream of the feed, the feed being performed in concealed time;
- a fixed casing (B) for receiving the piston ring members and the piston, comprising housings (1) receiving the rails and spacers (1, 2) and ensuring their positioning before assembly with the aid of sliding stops, slides (t) being provided for each rail or spacer;
- a system of expansible and sliding grips (47) ensuring the opening and the release of the rails or spacers (1, 2) as well as the centering of the piston (8); and
- a sliding plate (60) ensuring the successive positionings of the piston (8) at the time of the release of each rail or spacer (1, 2) into the groove (9) of the piston.

6. The machine as claimed in claim 5, wherein the distributor of spacers (2) comprises a magazine-tube (34) onto said spacers which are threaded, a fixed annular stop (41) ensuring the positioning of the end spacer, and a pusher (40) which is movable axially along said tube, which has at its lower part a bevel followed by a narrowing of diameter ensuring the centering of said end spacer.

7. The machine as claimed in claim 5 or 6, featuring a synchronization of the closure and of the separation of said grips (47) respectively with the closure and the separation of said slides (t).

## Patentansprüche

1. Maschine zum automatischen Setzen von Ringen auf Kolben, insbesondere auf Kolben von Brennkraftmaschinen, wobei es sich insbesondere um Abstreifringe handelt, die gebildet sind durch zwei Schienen (1), die auf der radial inneren Seite geschultert sind durch einen Abstandshalter (2), der zwischen ihnen eingefügt ist, wobei sie aufweist für die Einführung dieser Abstandshalter (2) in eine Nut (9) des Kolbens ein hohles Röhrenmagazin (4), das am Ende eine vergrößerte Bohrung (6) aufweist, die außen mit einer Abfasung (7) endet und einen Sitz für einen Kolben (8) bildet, derart, daß die zu beschickende Nut (9) des Kolbens sich in die Nachbarschaft dieser Abfasung (7) setzt, auf die Röhre (4) ist ein Stapel (5) dieser Abstandshalter (2) aufgefädelt, dadurch gekennzeichnet, daß dieser Stapel (5) automatisch und Schritt für Schritt auf der Röhre (4) durch einen axial bewegbaren Vordrücker (10) verschoben werden kann und dadurch, daß darüber hinaus auf der anderen Seite dieses Stapels (5) in Bezug zu dem Vordrücker (10) und in der Nachbarschaft zu der vorgenannten Abfasung (7) ein axial beweglicher Stempel (11) vorgesehen ist, der geeignet ist, aufeinanderfolgend zwei axial versetzte Position einzunehmen, nämlich eine erste Position, in der er diesen Stapel (5) der Abstandshalter zwischen sich und diesem Vordrücker (10) blockiert, wobei der letzte Abstandshalter (2) des Stapels, auf den er drückt, dann unter radialem Druck auf dieser Abfasung (7) ist, und eine zweite Position, in der dieser Stempel (11) sich entfernt von dem letzten Abstandshalter (2), ihm erlaubend dann auf die Abfasung (7) zu gleiten und durch radiales Zusammenziehen in die entsprechende Nut (9) dieses Kolbens (8) einzudringen.

2. Maschine nach Anspruch 1, dadurch gekennzeichnet, daß in dieser zweiten Position dieses Stempels (11) der Vordrücker (10) gleichermaßen entfernt ist von diesem Stapel (5) der Abstandshalter, um eine leichte Verschiebung dieses letzteren nach unten zu erlauben mit Ausnahme des letzten Abstandshalters (2) derart, daß er nicht das radiale Zusammenziehen des letzten Abstandshalters behindert zum Einführen in die betreffende Nut (9) des Kolbens (8).

3. Maschine nach Anspruch 1 oder 2, dadurch gekennzeichnet, daß für das Setzen der Schienen (1) in die Nut (9) des Kolbens (8) auf beiden Seiten des zuvor gesetzten Abstandshalters (2) sie aufweist ein Röhrenmagazin (13), auf das ein Stapel (12) von Schienen aufgefädelt ist, die auf einem Vordrücker (18) ruhen, wobei die Röhre vertikal entlang ihrer Achse (14) beweglich ist, eine Konstruktion von Schiebern (16) mit Ausnehmungen (19, 22), die geeignet sind, in einem festen Gehäuse (15) in eine Richtung senkrecht zu dieser Achse (14) zu gleiten, und eine Konstruktion von Klemmen (17), die auf einmal beweglich sind in der Richtung senkrecht zu dieser Achse (14) und vertikal in der Richtung dieser Achse, wobei diese Klemmen zur Funktion haben, diese Schienen (1) aufeinanderfolgend jeweils in die Ausnehmungen (19, 22) der Schieber (16) zu stoßen und den Kolben (8) nach unten zu führen, während nach ihrem Wiederanstieg diese Klemmen den Schienen (1) erlauben, von den Schiebern (16) frei zu kommen und in die Nut (9) des Kolbens einzudringen.

4. Maschine nach Anspruch 3, dadurch gekennzeichnet, daß diese Schieber (16) unmittelbar vor den Ausnehmungen (19, 22) geneigte Stufen (20, 23) aufweisen, die leicht die Schienen (1) radial nach innen komprimieren bei der Anstiegsbewegung des Röhrenmagazins (13), wobei die Ausnehmungen begrenzt sind weiterhin durch Anschläge (21, 24), die diese Schienen auf der Höhe dieser Ausnehmungen anhalten.

5. Maschine nach Anspruch 1, dadurch gekennzeichnet, daß sie aufweist:
- ein Zuführungssystem, das gebildet ist durch zwei Verteiler für die Schienen (1) mit Trennung und gleichzeitiger Zuführung, und einen Verteiler für die Abstandshalter mit Trennung vor der Zuführung wobei die Zuführung in nicht wahrnehmbarer Zeit abläuft;
- ein festes Gehäuse (B) für den Empfang der Elemente des Ringes und des Kolbens, der Aufnahmeräume (l) aufweist, die die Schienen und Abstandshalter (1, 2) empfangen und ihre Positionierung vor der Montage mit Hilfe von verschiebbaren Stempeln sicherstellen, wobei Schieber (t) vorgesehen sind für jede Schiene oder Abstandshalter;
- ein System von ausdehnbaren und verschiebbaren Klemmen (47), die die Öffnung und die Freigabe der Schienen und Abstandshalter (1, 2) sicherstellen wie auch die Zentrierung des Kolbens (8); und
- eine verschiebbare Platte (60), die die aufeinanderfolgenden Positionierungen des Kolbens (8) bei der Freigabe einer jeden Schiene oder Abstandshalter (1, 2) in der Nut (9) des Kolbens sicherstellt.

6. Maschine nach Anspruch 5, dadurch gekennzeichnet, daß der Verteiler der Abstandshalter (2) ein Röhrenmagazin (34), auf das die Abstandshalter aufgefädelt sind, einen ringförmigen festen Stempel (41), der die Positionierung des Abstandshalters des Endes sicherstellt und einen Vordrücker (40) aufweist, der axial entlang dieser Röhre beweglich ist, der an seinem unteren Ende eine Abfasung aufweist, gefolgt von einer Durchmesserverringerung, die die Zentrierung des Abstandshalters des Endes sicherstellt.

7. Maschine nach Anspruch 5 oder 6, gekennzeichnet durch eine Synchronisation des Schließens und der Spreizung der jeweiligen Klemmen (47) mit dem Schließen und der Spreizung der Schieber (t).
